# EUROPÄISCHE PATENTANMELDUNG

(11) **EP 0 586 815 A1**
(43) Veröffentlichungstag der Anmeldung: **16.03.1994**
(21) Anmeldenummer: 93110513.4
(22) Anmeldetag: 01.07.1993
(51) Int. Cl.: C04B 38/08, B01D 39/20

(54) **Poröse Keramik**

(30) Priorität: 22.07.1992 DE 4224173
(71) Anmelder: Hoechst CeramTec Aktiengesellschaft, D-95100 Selb (DE)
(72) Erfinder: Stuhler, Helmut G., D-8500 Nürnberg (DE)
(74) Vertreter: Hoffmann, Peter, Dipl.-Chem.

(57) **Zusammenfassung**

Die Erfindung betrifft eine poröse Keramik, deren Poren einen Durchmesser von > 5 µm besitzen. Die erfindungsgemäße Keramik besteht aus miteinander verbundenen Teilchen von im wesentlichen kugelförmiger (1) und im wesentlichen kantiger Gestalt (2), die einen Äquivalentdurchmesser von ≦ 1 mm besitzen.

## Beschreibung

Die Erfindung betrifft eine poröse Keramik mit Poren > 5 µm.

Poröse Keramik wird unter anderem als Filter für die Heißgasfiltration verwendet. Sie soll einen möglichst geringen Druckverlust bei hohem Luftdurchsatz aufweisen.

Nach "Staub-Reinhaltung der Luft 48, (1988), 197-202", sind poröse Keramiken aus Siliziumcarbid oder Aluminiumoxid bekannt, die durch keramische Fasern mechanisch stabilisiert sind.

Ferner sind nach der EP-A-0 391 321 poröse Keramiken aus Cordieritschamotten bekannt, bei denen der durchschnittliche Porendurchmesser 74 µm beträgt.

Nachteilig bei den bekannten Keramiken ist die unzureichende Filterflächenbelastung. Hier will die Erfindung Abhilfe schaffen.

Die Erfindung löst die Aufgabe, durch eine poröse Keramik, die aus miteinander verbundenen Teilchen von im wesentlichen kugelförmiger und kantiger Gestalt mit einem Äquivalentdurchmesser ≦ 1 mm besteht.

Die poröse Keramik kann 40 bis 85 % kugelförmige und 15 bis 60 % kantige Teilchen enthalten. Die Teilchen können durch eine Glasphase aus Ton, Feldspat oder einer Fritte miteinander verbunden sein. Die kugelförmigen Teilchen können hohl sein. Die kugelförmigen und kantigen Teilchen können aus Aluminiumoxid, Mullit, Cordierit, Siliziumnitrid, Siliziumcarbid, Tialit, Steatit, Porzellan, Zirkon, ZrO₂ oder Mischungen derselben bestehen.

Die erfindungsgemäße poröse Keramik wird hergestellt, indem kantige und abgerundete (kugelförmige) Teilchen miteinander vermischt werden, unter Zusatz von anorganischen und/oder organischen Bindemitteln sowie Formgebungshilfsmitteln geformt und anschließend bei Temperaturen im Bereich von 1000 bis 1400 °C gebrannt werden.

Als anorganische Bindemittel kommen Tone oder Feldspat in Frage, während die organischen Bindemittel verschiedene synthetische oder halbsynthetische Polymere sein können. Als Beispiele hierfür können Polyvinylalkohol, Polyvinylbutyral, Cellulose oder Cellulosederivate wie Methyl- oder Ethylcellulose angeführt werden. Als Formgebungshilfsmittel hat sich insbesondere Stärke bewährt, die im wesentlichen aus landwirtschaftlichen Erzeugnissen wie Kartoffeln, Mais, Getreide oder Reis gewonnen werden kann.

Die Formung selbst kann beispielsweise durch Extrusion eines Schlickers erfolgen, es können aber auch platten- oder zylinderförmige Teile trocken gepresst werden, die danach durch mechanische Bearbeitung in ihre endgültige Form überführt werden können. Die mechanische Bearbeitung kann dabei wahlweise an dem noch grünen Formteil oder auch nach dem Brennvorgang erfolgen.

Die Vorteile der Erfindung sind im wesentlichen in einem vergleichsweise hohen Filterflächenbelastungswert (b) zu sehen, wodurch der Leistungsbedarf (Gebläse-Energie) für den Betrieb eines Filters gesenkt werden kann. Der Filterflächenbelastungswert (b) wird bestimmt, indem Filterelemente mit einer bestimmten Geometrie an eine Saugvorrichtung angeschlossen werden, wonach dann mit einem konstanten Saugunterdruck Luft durch das Filterelement gesogen wird. Aus dem gemessenen Volumen der bei dem konstanten Unterdruck über ein bestimmtes Zeitintervall eigesogenen Luft ergibt sich der Filterflächenbelastungswert (b).

### Beispiel 1

40 Gewichtsteile kantiger Aluminiumoxidteilchen werden mit 60 Gewichtsteilen gerundeter Aluminiumoxidteilchen gemischt. Dann werden 4,5 Gewicxhtsteile Ton, 3,5 Gewichtsteile Feldspat, 2,5 Gewichtsteile Methylcellulose und 5 Gewichtsteile Stärke hinzugegeben und gründlich gemischt. Aus der Mischung wird durch Extrusion ein Rohr mit einem Außendurchmesser von 50 mm und einer Wandstärke von 5 mm hergestellt.

### Beispiel 2 (Vergleichsbeispiel)

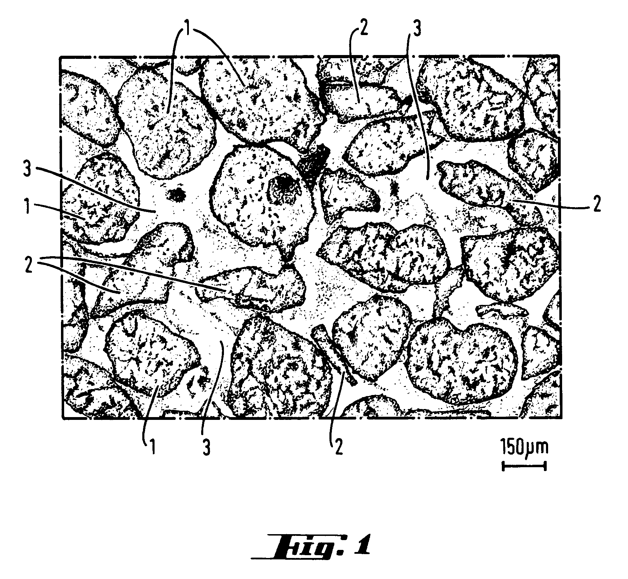

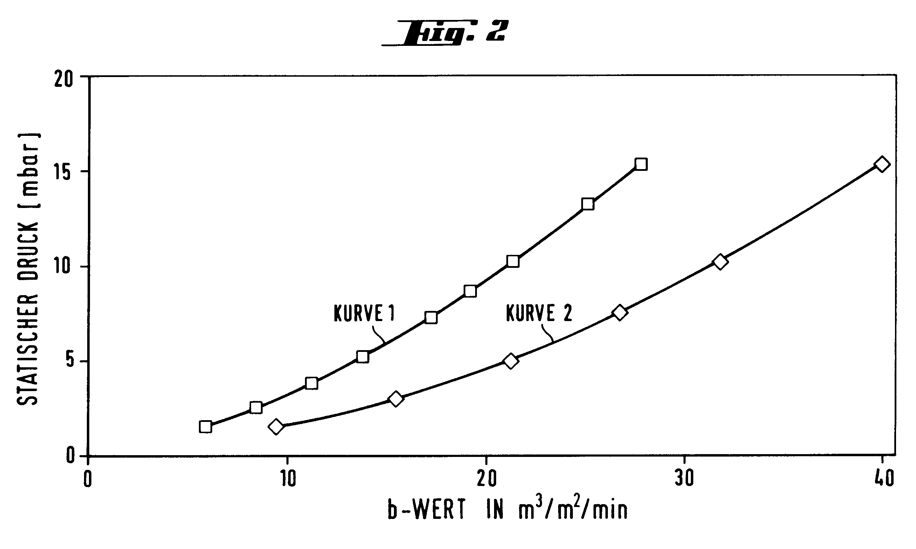

Aus 100 Gewichtsteilen kantiger Teilchen aus Aluminiumoxid werden unter Zusatz der gleichen Additive wie in Beispiel 1 durch Extrusion Rohre mit gleicher Geometrie wie in Beispiel 1 hergestellt. Die an den Rohren nach Beispiel 1 und Beispiel 2 ermittelten Meßwerte ergeben sich aus den nachfolgend aufgeführten Figuren
Die poröse Keramik wird anhand der Figuren 1 und 2, die weitere wichtige Merkmale zeigen, erläutert.

Die Figur 1, ein Schnitt durch die erfindungsgemäße Keramik, zeigt deutlich die gerundeten Keramikteilchen 1 und die kantigen Keramikteilchen 2. Mit 3 sind die Hohlräume zwischen den Teilchen angedeutet.

In Figur 2 ist der Filterflächenbelastungswert (b) in Abhängigkeit vom statischen Druck dargestellt. Es zeigt die Kurve 1 die Filterwiderstandscharakteristik einer Keramik nach Beispiel 2, die aus 100 % kantiger Teilchen besteht, und Kurve 2 die Filterwiderstandscharakteristik einer erfindungsgemäßen Keramik nach Beispiel 1, die aus 40 % kantigen Teilchen und 60 % gerundeten Teilchen besteht. Der höhere Filterflächenbelastungswert der erfindungsgemäßen Keramik gegenüber der herkömmlichen Keramik ist deutlich erkennbar. In beiden Fällen bestand die poröse Keramik aus Al₂O₃, die Wandstärke der rohrförmigen Filterelemente betrug jeweils 5,0 mm, ihr Außendurchmesser 50 mm.

Die erfindungsgemäße Keramik (in Form von Platten oder Rohren) eignet sich für den Bau von Filtersystemen, von Diffusorrohren, von Trägerrohren für Membranen, Katalysatoren oder Mikroorganismen.

## Patentansprüche

1. Poröse Keramik mit Poren > 5 µm, dadurch gekennzeichnet, daß die Keramik aus miteinander verbundenen Teilchen von im wesentlichen kugelförmiger und kantiger Gestalt mit einem Äquivalentdurchmesser ≦ 1 mm besteht.

2. Poröse Keramik nach Anspruch 1, dadurch gekennzeichnet, daß die Keramik 40 bis 85 % kugelförmige und 15 bis 60 % kantige Teilchen enthält.

3. Poröse Keramik nach Anspruch 1 oder 2, dadurch gekennzeichnet, daß die Teilchen durch eine Glasphase aus Ton, Feldspat oder einer Fritte miteinander verbunden sind.

4. Poröse Keramik nach einem der Ansprüche 1 bis 3, dadurch gekennzeichnet, daß die kugelförmigen Teilchen hohl sind.

5. Poröse Keramik nach einem der Ansprüche 1 bis 4, dadurch gekennzeichnet, daß die Keramik aus Aluminiumoxid` Mullit, Cordierit, Siliziumnitrit, Siliziumcarbid, Tialit, Steatit, Porzellan, Zirkon, ZrO₂ oder Mischungen derselben besteht.

6. Verfahren zur Herstellung einer pörösen Keramik nach einem der Ansprüche 1 bis 5, dadurch gekennzeichnet, daß kantige und kugelförmige Teilchen gemischt, unter Zusatz von anorganischen und/oder organischen Bindemitteln und Formgebungshilfsmitteln geformt und danach bei Temperaturen im Bereich von 1000 bis 1400 °C gebrannt werden.

7. Verfahren nach Anspruch 6, dadurch gekennzeichnet, daß das Formen durch Extrusion eines Schlickers bewirkt wird.

8. Verfahren nach Anspruch 6, dadurch gekennzeichnet, daß das Formen durch Trockenpressen bewirkt wird.

9. Verwendung einer porösen Keramik nach einem der Ansprüche 1 bis 5 für den Bau von Filtersystemen, von Diffusorrohren oder von Trägerrohren für Membranen.

10. Verwendung einer porösen Keramik nach einem der Ansprüche 1 bis 5 als Träger für Katalysatoren oder Mikroorganismen.
